# EUROPEAN PATENT SPECIFICATION

(11) **EP 1 780 048 B1**
(45) Date of publication and mention of the grant of the patent: **28.07.2010**
(21) Application number: 06255335.9
(22) Date of filing: 17.10.2006
(51) Int. Cl.: B60B 3/06, B60B 1/00

(54) **Wheel for motorcycle and production method thereof**
Rad für Motorrad und Verfahren zu dessen Herstellung
Roue pour motocycle et son procédé de fabrication

(30) Priority: 26.10.2005 JP 2005311274
(43) Date of publication of application: 02.05.2007
(73) Proprietor: Yamaha Hatsudoki Kabushiki Kaisha, Iwata-shi, Shizuoka-ken 438-8501 (JP)
(72) Inventor: Sekiguchi, Takuro c/o Yamaha Hatsudoki K.K., Shizuoka-ken 438-8501 (JP); Kataoka, Masashi c/o Yamaha Hatsudoki K.K., Shizuoka-ken 438-8501 (JP)
(74) Representative: Harris, Ian Richard

(56) References cited:
- EP-A1- 0 754 570
- DE-A1-102004 013 489
- JP-A- 2000 280 702
- US-A- 4 702 527

## Description

### BACKGROUND

The present invention relates to a wheel for a motorcycle whose hub includes an outer tubular section and an inner tubular section and which is intended to reduce weight by cutting down useless mass, and also relates to a production method of the wheel, according to the preamble of claims 1, 10.

A wheel is disclosed in JP-A-2000-280702 as a conventional wheel of this kind for a motorcycle. As shown in FIG. 13, the wheel 100 for a motorcycle is formed with a rim section 101 to which a tire is mounted, a hub section 102 through which an axle extends, and a plurality of spoke sections 103 connecting the rim section 101 and the hub section 102 to each other. The hub section 102 is formed with an inner tubular section 110, an outer tubular section 111, and a connecting part 112 for connecting the inner and outer tubular sections to each other, and a space 113 is defined between the inner tubular section 110 and the outer tubular section 111. The wheel can reduce weight thereof by having the space 113. Bearing support surfaces 110a, 110b are formed on both sides of an inner circumferential surface of the inner tubular section 110. The bearing support surface 110a, 110b are formed by machining after the casting process of the wheel 100.

Meanwhile, in the conventional art, a portion of the inner tubular section 110 is formed as a separate member called an auxiliary tubular member 114 to form a space 113 between the inner tubular section 110 and the outer tubular section 111 of the hub section 102. However, because the auxiliary tubular member 114 needs to be disposed within a mold or a core is required to be placed to define the space 113, the casting process is troublesome.

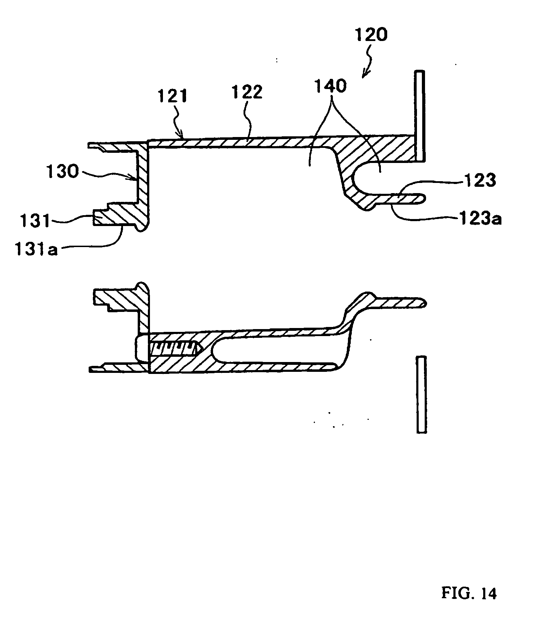

On the other hand, FIG. 14 shows another conventional art. A hub section 121 of a wheel 120 of this conventional art is constructed with an outer tubular section 122 formed in the wheel itself, one inner tubular section 123 formed in the wheel itself and the other inner tubular section 131 formed at a damper housing 130. Bearing support surfaces 123a, 131a are formed at respective inner circumferential surfaces of the pair of inner tubular sections 123, 131.

Because a space 140 is defined between the inner tubular section 121, 131 and the outer tubular section 122 of the hub section 121 in this latter conventional art, the reduction of weight can be realized similarly to the former conventional art. Also, because neither auxiliary tubular section nor core need to be placed within a mold, not similarly to the former conventional art, in the casting process of the wheel 120, the casting process is not troublesome.

However, the wheel 120 of the latter conventional art requires a machining process to form bolt holes 124 (damper housing attaching section) for attaching a damper housing 130 after the casting process. The damper housing 130 is then assembled after the machining process. After the assembling of the damper housing 130, a pair of bearing support surfaces 123a, 131a is need to be formed by machining respective inner circumferential surfaces of the inner tubular section 123 of the wheel 120 and the inner tubular section 131 of the damper housing 130. Additionally, even if the inner circumferential surfaces of the respective inner tubular sections 123, 131 are machined to form the pair of bearing support surfaces before the wheel 120 and the damper housing 130 are assembled together, accurate positioning cannot be achieved.

Because of the reasons discussed above, the latter conventional art requires machining process to be done twice. Accordingly, production workability is poor.

US 4,702,527 describes a built up wheel having a hub and a wheel body that are connected with each other detachably by fastener means, the hub consisting a bearing cylinder and a wheel support member formed integrally with the bearing cylinder, while the wheel body is provided with a boss which is connected with the wheel support member by a fastening means. The hub and wheel body are formed of different kinds of synthetic resin. In one example an annular recess in the hub is provided with a plurality of driving plates formed integrally with the wall of the recess. A plurality of circumferentially spaced driving members are formed integrally with a driving wheel so as to project therefrom in one axial direction. These driving members are inserted in the annular recess via a plurality of dampers. When the driving wheel is rotated, the driving force is transmitted to the hub via the driving member, dampers and driving plates.

The closest prior art document DE 10 2004 013489 A discloses a wheel construction in which a damper holder is connected to an outer hub body, and then an outer sleeve is inserted into an opening in the hub body until it meets with the damper holder. DE 10 20904 013489 describes a complex wheel and hub construction comprising many different parts and does not disclose a die cast wheel body that include integral inner and outer tubular sections connected via a connecting section.

EP-0,754,570-A discloses a cast wheel for a motor scooter that comprises a hub, a rim coaxially surrounding the hub and a plurality of spokes, the hub including a number of bosses for mounting a disk brake.

### SUMMARY

Embodiments of the invention are defined in the appended claims.

The present invention is made to solve the problem described above, and aims to provide a wheel of a motorcycle that can give superior production workability because of requiring only one machining to the wheel and also to provide a production method of the wheel.

An embodiment of the invention provides a wheel for a motorcycle comprising a unitary die-cast wheel body including: a rim section to which a tire is mounted; a hub section including an outer tubular section and an inner tubular section connected via ribs, both said outer tubular section and said inner tubular section having lateral end openings through which an axle extends; and a plurality of spoke sections connecting said rim section and said hub section to each other, wherein a damper housing attaching section provided by bolt holes is formed at one end of said outer tubular section of said hub section, and a bearing support surface is formed in an inner circumferential surface of said inner tubular section of said hub section.

Said inner tubular section of said hub section has a projection projecting beyond an end of said outer tubular section in an axle direction. The wheel further comprises a damper housing for enclosing a damper that attenuates drive force transmitted from an engine to the wheel, and said damper housing is fitted onto said projection and is attached to said damper housing attaching section of said outer tubular section using bolts.

Said ribs project radially relative to said axle direction and extend in said axle direction, and said ribs are separated by through holes which extend between said lateral end openings of said outer tubular section.

In an embodiment, as to the lateral side ends of either one of the inner tubular section and the outer tubular section, an opening area of one of the lateral side ends can be formed to be larger than that of the other lateral side end.

In an embodiment, a rib connecting the hub section and the rim section to each other can be formed in each one of the spoke sections.

In an embodiment, the rib can be formed at a leading edge portion and a trailing edge portion of the each one of the spoke sections relative to a rotational direction of the wheel along a width direction of the wheel.

In an embodiment, the each one of the spoke sections can include a first spoke section and a second spoke section positioned next to each other, and the each one of the spoke sections can be connected to the hub section while the first spoke section and the second spoke section intersecting each other.

In an embodiment, the first spoke section and the second spoke section intersect each other adjacent to a connecting portion thereof connecting to the hub section.

In an embodiment, the each one of the spoke sections can extend in a tangential line direction of the outer tubular section of the hub section to be connected to the outer tubular section.

In an embodiment, a material of the wheel can be magnesium.

In an embodiment, the wheel can include a brake disk, wherein the brake disk can be assembled with an end of the outer tubular section via an aluminum plate.

Another aspect of the invention provides a production method of a wheel for a motorcycle comprising:
a casting process in which a wheel body, including a rim section, a hub section including an inner tubular section and an outer tubular section connected via ribs, and a plurality of spoke sections, is cast by die-casting, said inner tubular section of said hub section having a projection projecting beyond an end of said outer tubular section in an axle direction, said ribs projecting radially relative to said axle direction and extending in said axle direction, and said ribs being separated by through holes which extend between lateral end openings of said outer tubular section;
a machining process in which a damper housing attaching section provided by bolt holes is formed at one end of said outer tubular section of said hub section of said wheel cast body, and a pair of bearing support surfaces are formed on both lateral ends of an inner circumferential surface of said inner tubular section of said hub section;
fitting a damper housing for enclosing a damper that attenuates drive force transmitted from an engine to the wheel onto said projection; and
attaching said damper housing to said damper housing attaching section of said outer tubular section using bolts.

Because the wheel can be produced in the machining process to form the damper housing attaching section and the pair of bearing support surfaces on the wheel cast body produced in the casting process, and the damper housing can be assembled with the wheel, the machining process can be made at one time and the production workability can be improved.

In an embodiment, a rib can be formed at a leading edge portion and a trailing edge portion of each one of the spoke sections relative to a rotational direction of the wheel in a width direction of the wheel, and a distal end portion of the rib can be formed as a parting surface in the casting process.

### BRIEF DESCRIPTION OF THE DRAWINGS

Example embodiments of the invention are described hereinafter with reference to the accompanying drawings in which:
FIG. 1 illustrates a side elevational view of a motorcycle for an example embodiment of the present invention;
FIG. 2 illustrates a right side elevational view of a rear wheel of an example embodiment of the present invention;
FIG. 3 illustrates a left side elevational view of the rear wheel of the example embodiment;
FIG. 4 is a cross sectional view along the line A-A of FIG. 2;
FIG. 5 illustrates a right side elevational view of a wheel body of an example embodiment of the present invention;
FIG. 6 illustrates a left side elevational view of the wheel body of an example embodiment of the present invention;
FIG. 7 is a cross sectional view along the line B-B of FIG. 5;
FIG. 8 is a cross sectional view along the line C-C of FIG. 7;
FIG. 9 illustrates a cross sectional view for explaining a casting process for an example embodiment of the present invention;
FIG. 10(a) is a cross sectional view showing a position of a parting surface of a cast metal mold.
FIG. 10(b) is a cross sectional view showing an example in which the parting surface is positioned in the center in a width direction of the wheel body.
FIG. 11 is a cross sectional view for explaining a machining process to the wheel body for an example embodiment of the present invention;
FIG. 12 is a cross sectional view for explaining a process in which a damper housing is assembled with the wheel body for an example embodiment of the present invention;

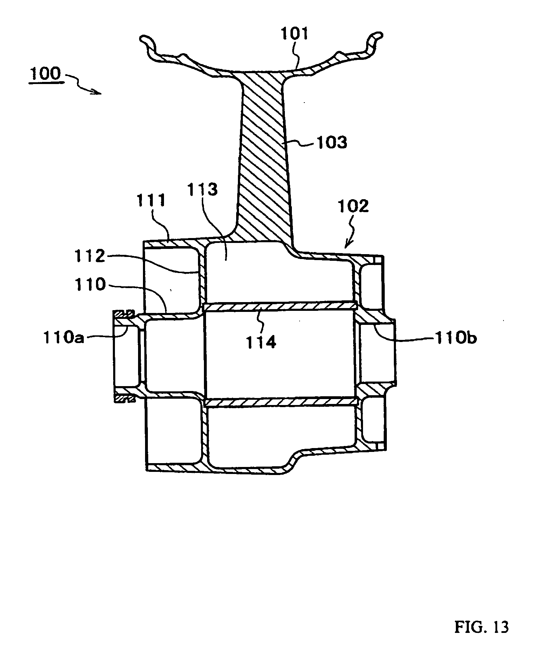

FIG. 13 is a cross sectional view of a conventional wheel body;
FIG. 14 is a cross sectional view of another conventional wheel body and a damper housing.

### DETAILED DESCRIPTION

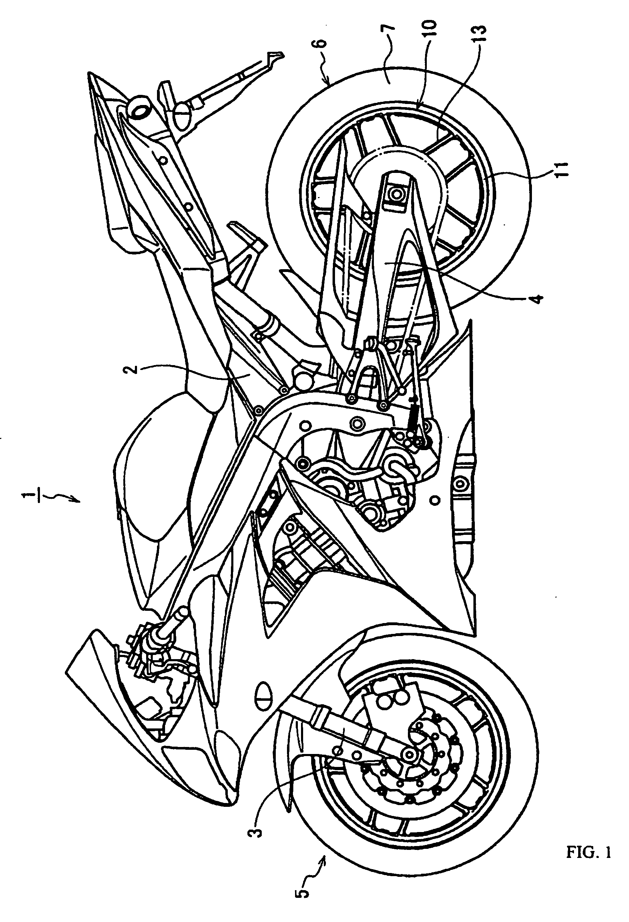

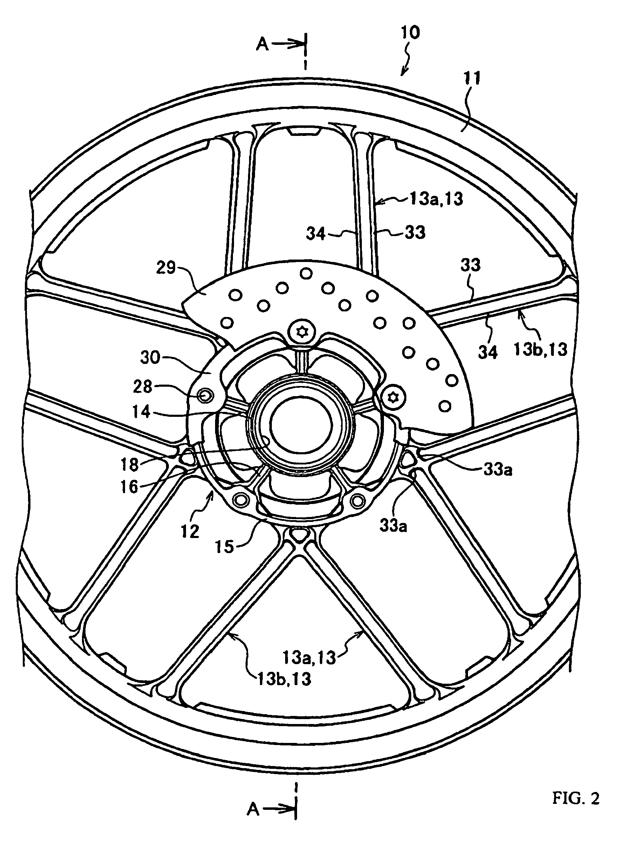

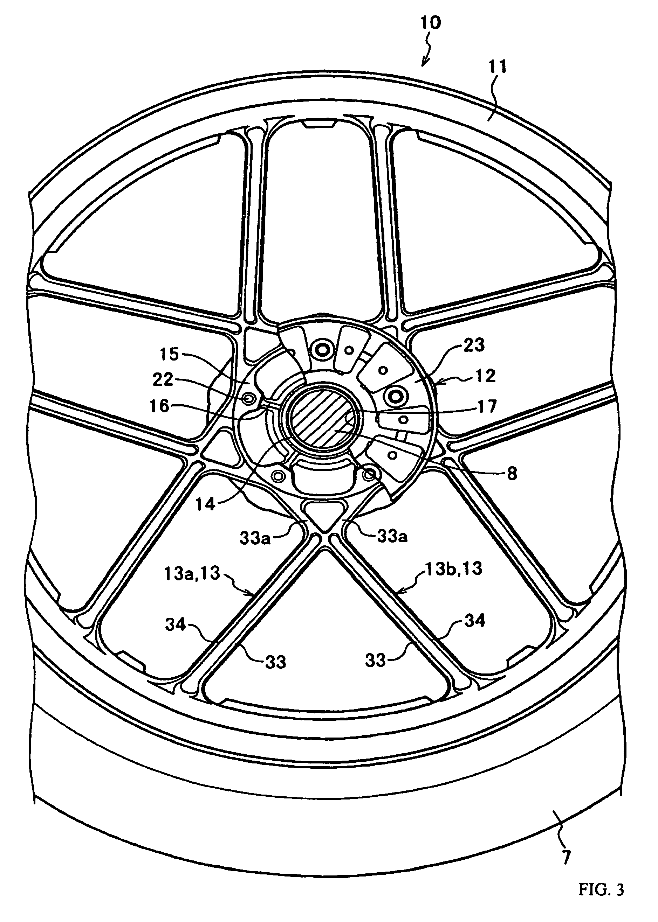

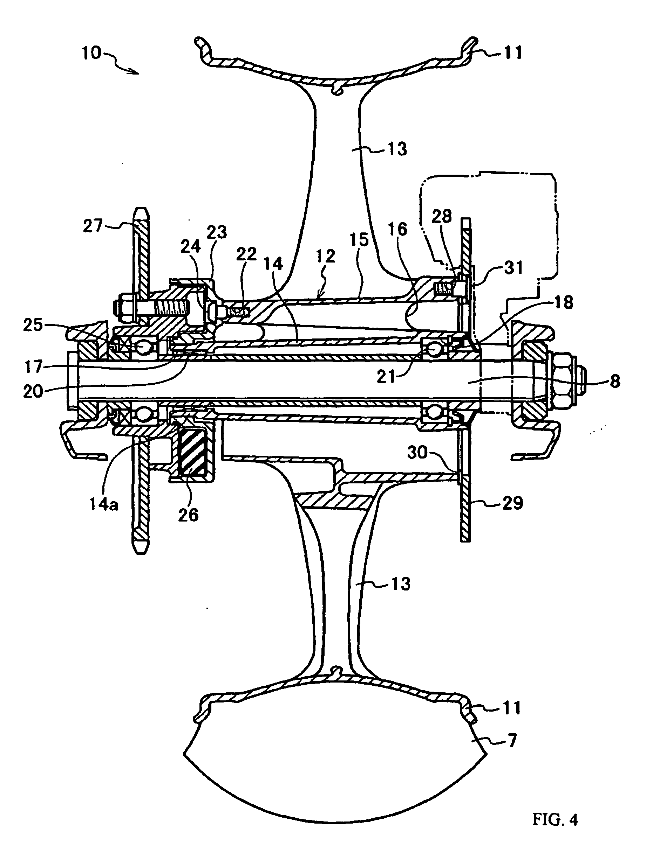

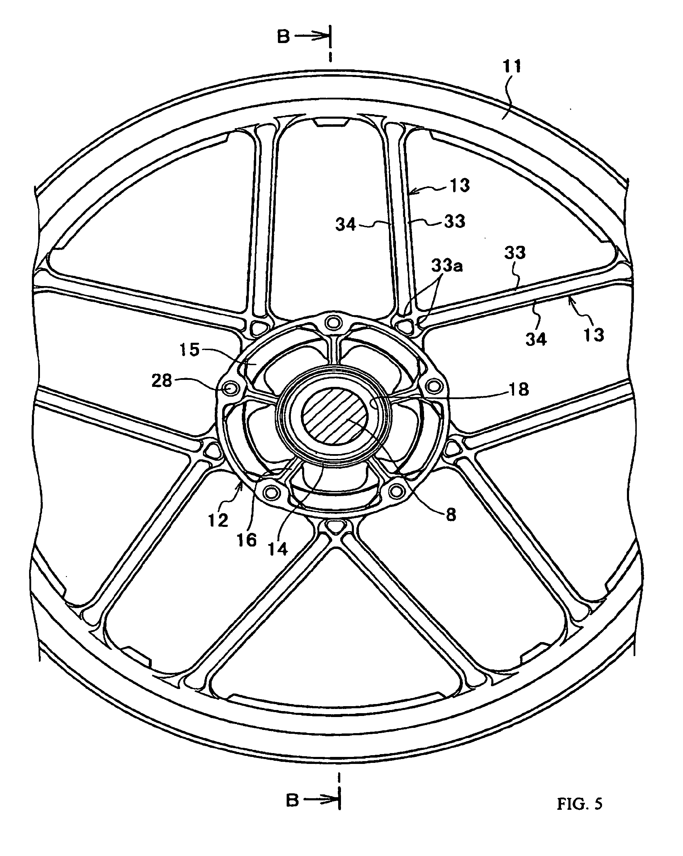

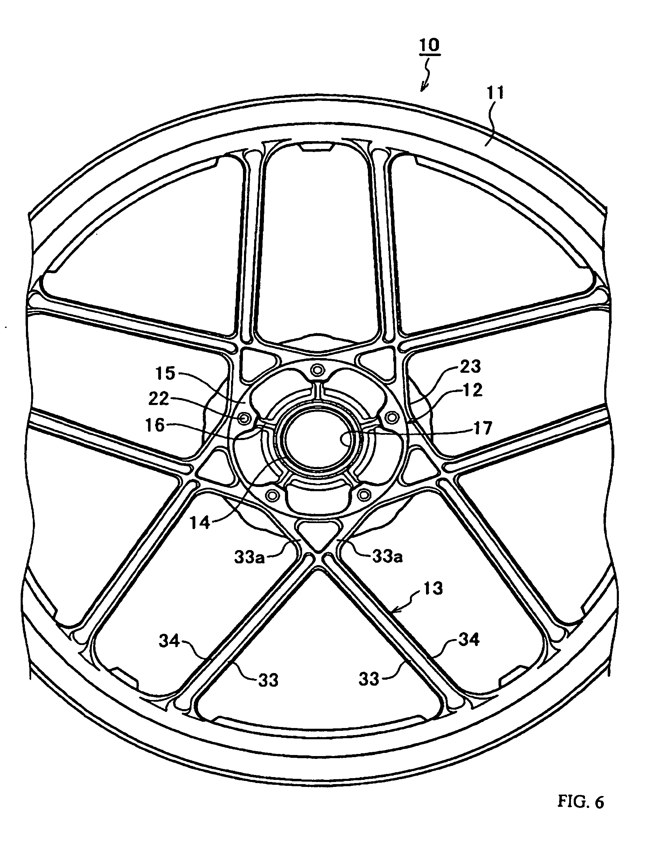

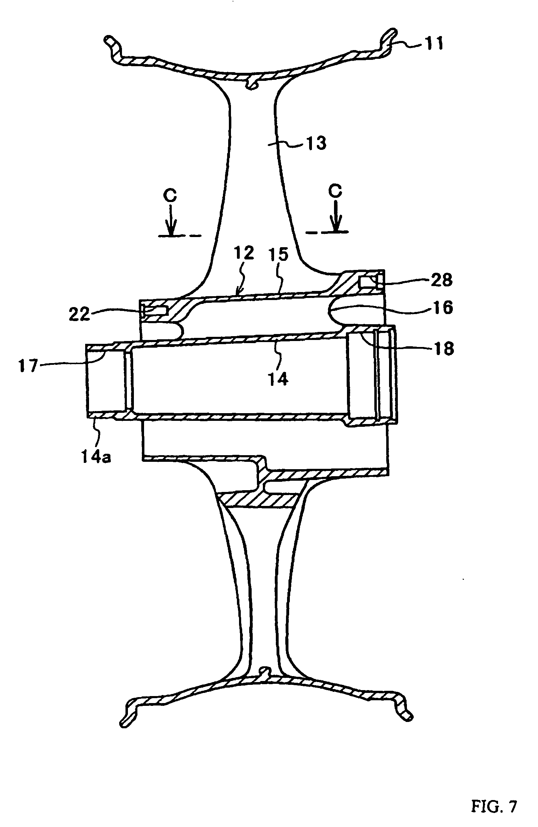

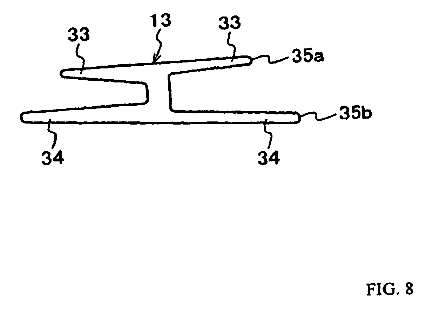

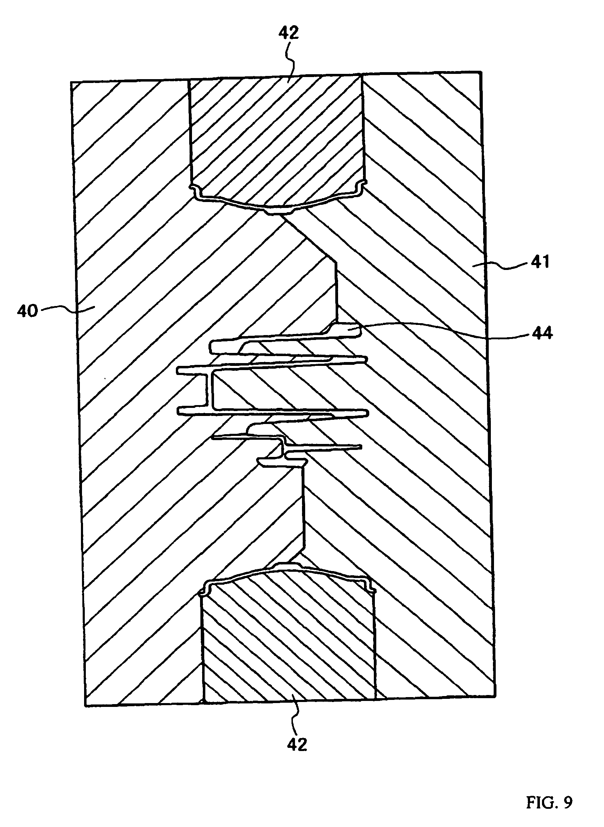

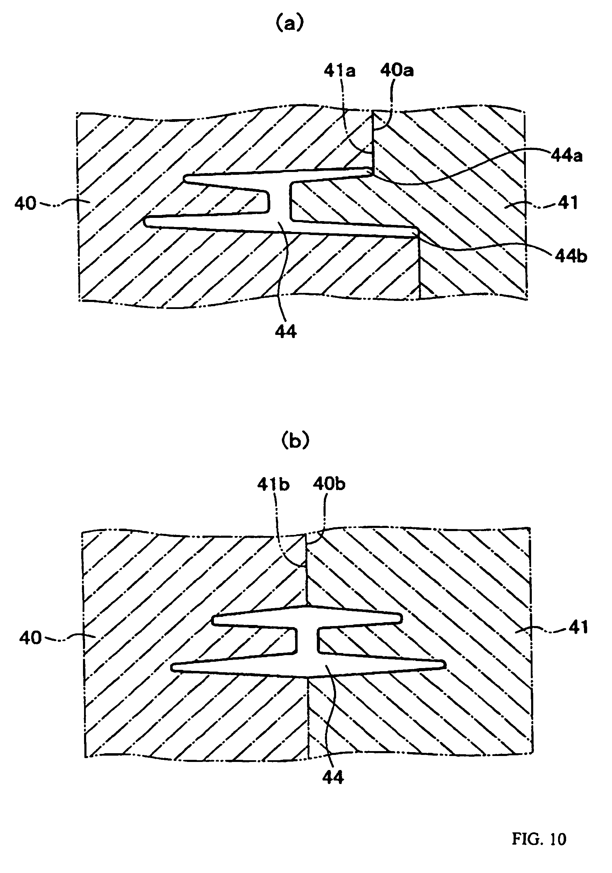

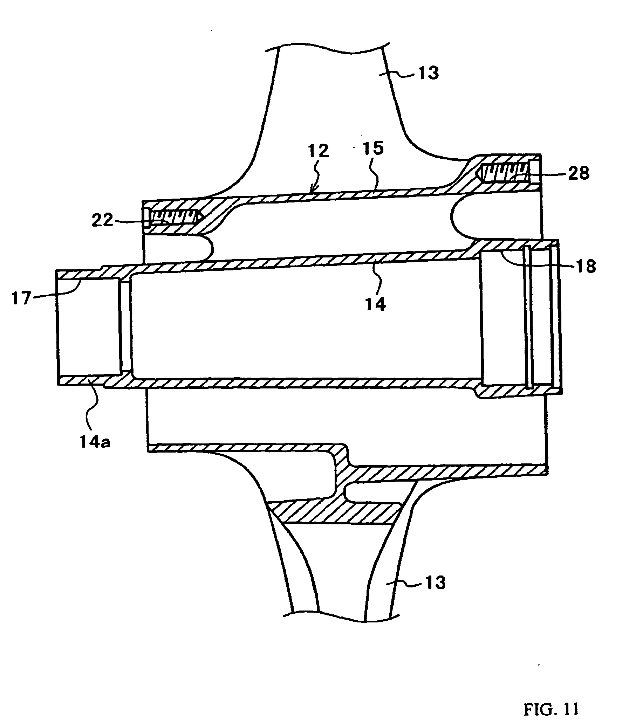

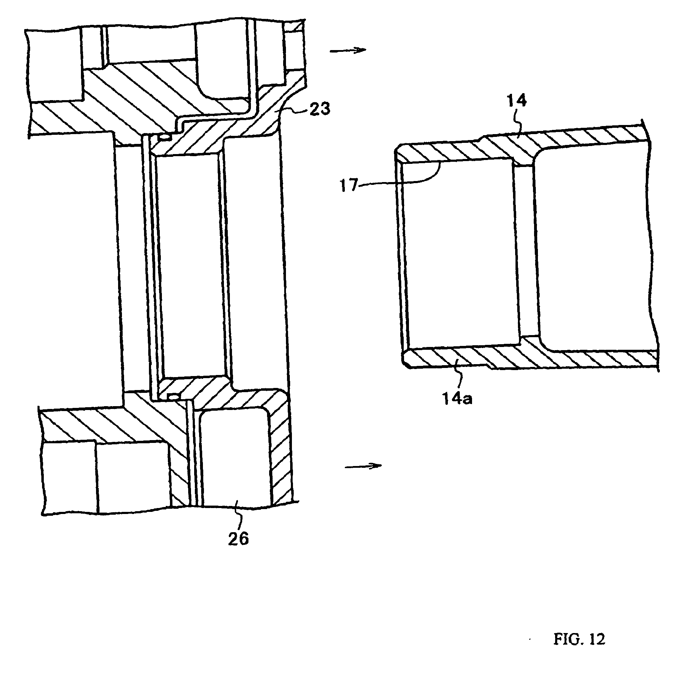

Hereunder, an example embodiment of the present invention will be described based upon the drawings. FIGs. 1-12 show an example embodiment of a motorcycle to which a wheel of the present invention is applied. FIG. 1 is a side elevational view of the motorcycle. FIG. 2 is a right side elevational view of a rear wheel. FIG. 3 is a left side elevational view of the rear wheel. FIG. 4 is a cross sectional view taken along the line A-A of FIG. 2. FIG. 5 is a right side elevational view of a wheel body. FIG. 6 is a left side elevational view of the wheel body. FIG. 7 is a cross sectional view taken along the line B-B of FIG. 5. FIG. 8 is a cross sectional view taken along the line C-C of FIG. 7. FIG. 9 is a cross sectional view for explaining a casting process. FIG. 10(a) is a cross sectional view showing a position of a parting surface of a cast metal mold. FIG. 10(b) is a cross sectional view showing an example in which the parting surface is positioned in the center in a width direction of the wheel body. FIG. 11 is a cross sectional view for explaining a machining process to the wheel body. FIG. 12 is a cross sectional view for explaining a process in which a damper housing is assembled with the wheel body.

As shown in FIG. 1, the motorcycle 1 includes a vehicle body 2, a front fork 3 and a rear arm 4 supported at front and rear positions of the vehicle body 2, respectively, and a front wheel 5 and a rear wheel 6, both of which wheels supported at respective distal ends of the front fork 3 and the rear arm 4. A wheel body 10 according to the present invention is applied to the rear wheel, and a structure of the rear wheel 6 will be described next.

As shown in FIGs. 2-7, the wheel body 10 of the example embodiment of a rear wheel 6 is made by CF die-casting using a magnesium material. A tire 7 is mounted on the wheel body 10. The wheel body 10 includes an annular rim section 11, a hub section 12 through which an axle 8 extends and ten spoke sections 13 connecting the rim section 11 and the hub section 12 to each other.

The hub section 12 is constructed with an inner tubular section 14, an outer tubular section 15, and a connecting section 16 for connecting both sections 15, 16 to each other. The inner tubular section 14 and the outer tubular section 15 have inclining cylindrical configurations which incline together in the same direction relative to an axial direction of the axle 8. In addition, respective inner and outer circumferential surfaces are formed to be surfaces defining a certain draft angle (approximately 1.5 degree). That is, the inner and outer circumferential surfaces of the inner tubular section 14 and the outer tubular section 15 together form the draft angle (approximately 1.5 degree), and both of the inner tubular section 14 and the outer tubular section 15 are formed in such a manner that an opening area of one lateral side end is larger than that of the other lateral side end; thereby, the hub section 12 having the inner tubular section 14 and the outer tubular section 15 and having no useless or unnecessary mass existing between the inner tubular section 14 and the outer tubular section 15 can be produced by a die-casting method.

The inner circumferential surfaces of the inner tubular section 14 on both sides thereof in the axle direction are formed as a pair of bearing support surfaces 17, 18. A needle bearing 20 is interposed between one bearing support surface 17 and the axle 8, while a ball bearing 21 is interposed between the other bearing support surface 18 and the axle 8. The wheel body 10 is supported by the axle 8 via the needle bearing 20 and the ball bearing 21 for rotation.

Several bolt holes 22 which provide a damper housing attaching section are formed at one end of the outer tubular section 15. Also, a projection 14a projecting outside in an axial direction thereof beyond the outer tubular section 15 is formed at one end of the inner tubular section 14. The damper housing 23 is put onto the projection 14a and is assembled with one end of the wheel 10 by being coupled with the outer tubular section 15 using bolts 24. A ball bearing 25 is interposed between the damper housing 23 and the axle 8 so that the damper housing 23, together with the wheel body 10, is supported for rotation relative to the axle 8 via the ball bearing 25. In addition, dampers 26 are supported at proper locations in the damper housing 23. Rotation from a side of a sprocket 27 is transmitted to the wheel body 10 via the multiple dampers 26.

Several bolt holes 28 for attaching a brake disk are formed at the other end of the outer tubular section 15. The brake disk 29 is coupled with the outer tubular section 15 by a plurality of bolts 31 via one ring-shaped aluminum plate 30 to be assembled with the other end of the wheel body 10.

Each spoke section 13 extends to the side of the rim section 11 in a tangential line direction of the hub section 12. As shown in FIG. 8, a cross sectional surface of each spoke section 13 is formed as the H-shape. Because of this H-shape, each spoke 13 has a pair of ribs 33, 34 formed on the front and reverse sides thereof. Also, a first spoke section 13a and a second spoke section 13b which are two spoke sections neighboring each other merge together at connecting portions thereof connecting to the hub section 12. In addition, the ribs 33 extend to the hub section 12 while intersecting one another at each connecting portion of the two spoke sections, i.e., the first spoke section 13a and the second spoke section 13b. Some of the ribs 33 positioned at the connecting portions are indicated by reference numeral 33a in the drawings to be clearly differed.

Next, production processes of the wheel body 10 will be described. First, a wheel cast body having a basic configuration of the wheel body 10 is formed by the CF die-casting method. That is, as shown in FIG. 9, using right and left molds 40, 41 and circumference molds 42, 42 which can be divided into four parts in the circumferential direction, the interior of a cavity 44 formed by the molds is vacuumed so as to be filled with molten magnesium. After the cavity is filled with the molten magnesium, the magnesium is cooled to a preset temperature to be solidified, resulting in a raw wheel body, followed by removing the right and left molds 40, 41 and the circumference molds 42, 42. In the embodiment, as shown in FIG. 10(a), portions of the right and left molds 40, 41 for forming the spoke sections 13 are set to have parting surfaces 40a, 41 a existing at cavities 44a, 44b corresponding to distal end portions 35a, 35b of the respective ribs 33, 34 forming the H-shape.

Next, the wheel cast body is machined. That is, as shown in FIG. 11, both of end surfaces of the outer tubular section 15 of the hub section 12 are cut to be flat, and the bolt holes 22, 28 are formed at proper portions in both of the end surfaces. Also, the inner circumferential surfaces on both sides of the inner tubular section 14 are cut to be the bearing support surfaces 17, 18.

Next, an assembling process in which the respective components are assembled with the wheel body 10 is made. That is, as shown in FIG. 12, the damper housing 23 is fitted in the one side of the inner tubular section 14 of the hub section 12, and the damper housing 23, which is fitted in, is assembled by the multiple bolts 24. Also, the brake disk 29 is placed on the other side of the hub section 12 via the aluminum plate 30 and the brake disk 29 is assembled by the multiple bolts 31.

As thus described, the wheel body 10 has the bolt holes 22 functioning as the damper housing attaching section and formed in the outer tubular section 15 of the hub section 12, and the pair of bearing support surfaces 17, 18 are formed in the inner tubular section 14 of the hub section 12 and at the inner circumferential surfaces on both sides of the inner tubular section 14. Thus, all the things that need to be done are to machine the wheel cast body formed in the casting process to form the bolt holes 22 and the pair of bearing support surfaces 17, 18 so as to complete the wheel body 10, and to assemble the damper housing 23 with the wheel body 10 that has been completely machined. Thereby, the machining processes for the wheel cast body can be made at once. That is, the machining processes for the wheel cast body can be made in one processing stage. The production workability thus can be improved.

In the embodiment, the inner tubular section 14 of the hub section 12 projects beyond the outer tubular section 15 in the axial direction and the damper housing 23 is fitted in the projected inner tubular section 14. Thus, the positioning work and the assembling work of the damper housing 23 to the wheel body 10 can be easily made.

In the embodiment, the inner tubular section 14 and the outer tubular section 15 of the hub section 12 have the inclining cylindrical configurations which incline together in the same direction relative to the axial direction of the axle 8, and the respective inner and outer circumferential surfaces are formed to be surfaces defining the certain draft angle. Therefore, the hub section 12 having no useless mass can be prepared by die-casting.

In the embodiment, the cross sectional surface of each spoke section 13 is formed as the H-shape and the H-shape makes it possible to form the pair of ribs on the front and reverse sides thereof. The hub section 12 having no useless mass thus can be produced by die-casting. Also, because of the H-shape, each spoke section 13 has the pair of ribs 33, 34. The strength of the spoke 13 can be further improved.

In the embodiment, the two spoke sections 13 neighboring each other are merged at the connecting portion thereof connecting to the hub section 12, and the ribs 33a extend to the hub 12 while intersecting each other at the connecting portion. The strength of the spoke sections 13 thus can be extremely improved with little increase of weight.

In the embodiment, because the spoke sections 13 extend in the tangential directions of the hub section 12, basically the bending stress does not act on the spoke sections 13 but mainly the compressive stress or tension stress act on them during braking or accelerating operation. Therefore, the concentrated stress is hardly generated. Accordingly, the spoke sections 13 can contribute to the design thereof to be light in weight.

In the embodiment, because the material of the wheel body 10 is magnesium, the wheel body 10 can be made to have light weight without spoiling the strength thereof in comparison with an aluminum wheel body.

In the embodiment, the brake disk 29 is assembled with the wheel body 10 via the one aluminum plate 30. The one aluminum plate 30 can avoid the electrical corrosion and is useful for improving accuracy, assuring flatness and avoiding mistakes in which the brake disk 29 is not assembled with. Further, radiation of heat from the brake disk 20 can be improved.

In the embodiment, the wheel body 10 is formed by a casting process in which a rim section 11, a hub section 12 including an inner tubular section 14 and an outer tubular section 15, and a plurality of spoke sections 13 are cast by die-casting to obtain a wheel cast body, and a machining process in which bolt holes 22, which is a damper housing attaching section, are formed on the outer tubular section 15 of the hub section 12 of the wheel cast body, and a pair of bearing support surfaces 17, 18 are formed on both sides of the inner circumferential surface of the inner tubular section 14 of the hub section 12. Thereby, the machining processes for the wheel body 10 can be made at once. That is, the machining processes for the wheel cast body can be made in one processing stage. The production workability thus can be improved.

In the embodiment, the cross sectional surface of each spoke section 13 has the H-shape, the parting surfaces 40b, 41b for the casting process are made at the distal end portions 35a, 35b of the respective ribs 33, 34 forming the H-shape to have the casting process done. That is, as shown in FIG. 10(a), the right and left molds 40, 41 for forming the spoke section 13 have the parting surfaces 40a, 41b made at the cavities 44a, 44b forming the distal end portions 35a, 35b of the respective ribs 33, 34 so that a distance between the distal end portions 35a, 35b is separated more than a distance between base end portions or roots. Thus, the right half of the H-shape can be formed to have almost the same thickness. To the contrary, as shown in FIG. 10(b), if surfaces existing in the center in the width direction of the wheel and extending in the rotational direction of the wheel body 10 passing through the center of the H-shape are given as the parting surfaces 40b, 41b, the thickness of the spoke section 13 needs to be tapered in the entire portions thereof in relation to the draft angle and the spoke section 13 cannot be formed evenly. Because of the reasons above, by setting the distal end portions 35a, 35b of the respective ribs 33, 34 to be the parting surfaces in this embodiment, the useless or unnecessary mass can be reduced and the extremely even spoke 13 can be produced. Accordingly, the spoke section 13 can be made light in weight.

In the embodiment, because the casting process is the CF-die casting, the wheel body 10 can be thinner and lighter.
In order to provide for superior production workability for a wheel of a motorcycle by requiring only one machining to the wheel, there has been described a wheel in which a rim section to which a tire is mounted, a hub section including an inner tubular section and an outer tubular section, and a plurality of spoke sections connecting the rim section and the hub section to each other are provided. Bolt holes can be provided to the outer tubular section 15 of the hub section for attaching a damper housing attaching section. A pair of bearing support surfaces can be formed in the inner tubular section of the hub section and on both ends of inner circumferential surfaces thereof.

### DESCRIPTION OF REFERENCE NUMERALS:

- 7:: tire
- 8:: axle
- 10:: wheel body
- 11:: rim section
- 12:: hub section
- 13:: spoke section
- 13a:: first spoke section
- 13b:: second spoke section
- 14:: inner tubular section
- 15:: outer tubular section
- 17, 18:: bearing support surface
- 20:: needle bearing (bearing)
- 21:: ball bearing (bearing)
- 22:: bolt holes (damper housing attaching section)
- 23:: damper housing
- 29:: brake disk
- 30:: aluminum plate
- 33, 33a, 34:: rib
- 35a, 35b:: distal portion of the rib

## Claims

1. A wheel for a motorcycle comprising a unitary die-cast wheel body including: a rim section (11) to which a tire is mounted; a hub section (12) including an outer tubular section (15) and an inner tubular section (14) connected via ribs (16), both said outer tubular section and said inner tubular section having lateral end openings through which an axle extends; and a plurality of spoke sections (13) connecting said rim section and said hub section to each other, wherein
a damper housing attaching section (22) provided by bolt holes is formed at one end of said outer tubular section of said hub section;
a bearing support surface (17, 18) is formed in an inner circumferential surface of said inner tubular section of said hub section;
said inner tubular section of said hub section has a projection (14a) projecting beyond an end of said outer tubular section in an axle direction;
the wheel further comprises a damper housing (23) for enclosing a damper that attenuates drive force transmitted from an engine to the wheel, and said damper housing is fitted onto said projection and is attached to said damper housing attaching section of said outer tubular section using bolts; and
said ribs (16) project radially relative to said axle direction and extend in said axle direction, and said ribs are separated by through holes which extend between said lateral end openings of said outer tubular section.

2. The wheel for a motorcycle according to Claim 1, wherein
with respect to the lateral side ends of either one of said inner tubular section and said outer tubular section, an opening area of one of the lateral side ends is formed to be larger than that of the other lateral side end.

3. The wheel for a motorcycle according to any preceding Claim, wherein
a rib (33,34) connecting the hub section and the rim section to each other is formed in each one of said spoke sections.

4. The wheel for a motorcycle according to Claim 3, wherein
said rib is formed at a leading edge portion and a trailing edge portion of the each one of said spoke sections relative to a rotational direction of the wheel along a width direction of the wheel.

5. The wheel for a motorcycle according to Claim 3 or 4, wherein
the each one of said spoke sections includes a first spoke section and a second spoke section positioned next to each other, and
the each one of said spoke sections is connected to said hub section while said first spoke section and said second spoke section intersecting each other.

6. The wheel for a motorcycle according to Claim 5, wherein
said first spoke section and said second spoke section intersect each other adjacent to a connecting portion thereof connecting to said hub section.

7. The wheel for a motorcycle according to any preceding Claim, wherein
the each one of said spoke sections extends in a tangential line direction of said outer tubular section of said hub section to be connected to said outer tubular section.

8. The wheel for a motorcycle according to any preceding Claim, wherein
a material of the wheel is magnesium.

9. The wheel for a motorcycle according to Claim 8, further comprising a brake disk, wherein
said brake disk is assembled with an end of said outer tubular section via an aluminum plate.

10. A production method of a wheel for a motorcycle comprising:
a casting process in which a wheel body, including a rim section (11), a hub section (12) including an inner tubular section (14) and an outer tubular section (15) connected via ribs (16), and a plurality of spoke sections (13), is cast by die-casting, said inner tubular section of said hub section having a projection (14a) projecting beyond an end of said outer tubular section in an axle direction, said ribs (16) projecting radially relative to said axle direction and extending in said axle direction, and said ribs being separated by through holes which extend between lateral end openings of said outer tubular section;
a machining process in which a damper housing attaching section (22) provided by bolt holes is formed at one end of said outer tubular section of said hub section of said wheel cast body, and a pair of bearing support surfaces (17, 18) are formed on both lateral ends of an inner circumferential surface of said inner tubular section of said hub section;
fitting a damper housing (23) for enclosing a damper that attenuates drive force transmitted from an engine to the wheel onto said projection; and
attaching said damper housing to said damper housing attaching section of said outer tubular section using bolts.

11. The production method of a wheel for a motorcycle according to Claim 10, wherein
a rib is formed at a leading edge portion and a trailing edge portion of each one of said spoke sections relative to a rotational direction of the wheel in a width direction of the wheel, and
a distal end portion of said rib is formed as a parting surface in the casting process.

## Patentansprüche

1. Rad für ein Motorrad, das einen einheitlichen Druckgussradkörper umfasst mit: einem Felgenabschnitt (11), auf dem ein Reifen montiert wird, einem Nabenabschnitt (12) mit einem äußeren röhrenförmigen Abschnitt (15) und einem inneren röhrenförmigen Abschnitt (14), die über Rippen (16) verbunden sind, wobei der äußere röhrenförmige Abschnitt und der innere röhrenförmige Abschnitt über Öffnungen an den seitlichen Enden verfügen, durch die sich eine Achse erstreckt, und eine Mehrzahl von Speichenabschnitten (13), die den Felgenabschnitt und den Nabenabschnitt miteinander verbinden, wobei
ein Abschnitt zur Befestigung eines Dämpfergehäuses (22) bereitgestellt durch Schraubenbohrungen an einem Ende des äußeren röhrenförmigen Abschnitts des Nabenabschnitts gebildet ist,
eine Lagerkontaktfläche (17, 18) in einer inneren Mantelfläche des inneren röhrenförmigen Abschnitts des Nabenabschnitts gebildet ist,
der innere röhrenförmige Abschnitt des Nabenabschnitts über einen Überstand (14a) verfügt, der über ein Ende des äußeren röhrenförmigen Abschnitts in einer Achsrichtung herausragt,
das Rad darüber hinaus ein Dämpfergehäuse (23) umfasst, um einen Dämpfer zu umschließen, der die vom Motor auf das Rad übertragene Antriebskraft abschwächt, und das Dämpfergehäuse auf dem Überstand angebracht ist, und an dem Abschnitt zur Befestigung des Dämpfergehäuses des äußeren röhrenförmigen Abschnitts mit Schrauben befestigt ist, und
die Rippen (16) radial relativ zu der Achsrichtung herausragen und sich in Achsrichtung erstrecken, und die Rippen durch Durchgangslöcher getrennt sind, die sich zwischen den Öffnungen an den seitlichen Enden des äußeren röhrenförmigen Abschnitts erstrecken.

2. Rad für ein Motorrad nach Anspruch 1, wobei
im Hinblick auf die seitlichen Enden an dem inneren röhrenförmigen Abschnitt oder dem äußeren röhrenförmigen Abschnitt ein Öffnungsbereich an einem der seitlichen Enden so geformt ist, dass er größer ist als der am anderen seitlichen Ende.

3. Rad für ein Motorrad nach einem der vorhergehenden Ansprüche, wobei
in jedem der Speichenabschnitte eine Rippe (33,34) ausgebildet ist, die den Nabenabschnitt und den Felgenabschnitt miteinander verbindet.

4. Rad für ein Motorrad nach Anspruch 3, wobei
die Rippe an einem Vorderkantenabschnitt und an einem Hinterkantenabschnitt an jedem der Speichenabschnitte relativ zu einer Drehrichtung des Rads in einer Breitenrichtung des Rads ausgebildet ist.

5. Rad für ein Motorrad nach Anspruch 3 oder 4, wobei
jeder der Speichenabschnitte einen ersten Speichenabschnitt und einen zweiten Speichenabschnitt umfasst, die nebeneinander angeordnet sind, und
jeder der Speichenabschnitte mit dem Nabenabschnitt verbunden ist, wobei sich der erste Speichenabschnitt und der zweite Speichenabschnitt überkreuzen.

6. Rad für ein Motorrad nach Anspruch 5, wobei
sich der erste Speichenabschnitt und der zweite Speichenabschnitt neben einem Verbindungsabschnitt davon überkreuzen, der mit dem Nabenabschnitt verbunden ist.

7. Rad für ein Motorrad nach einem der vorhergehenden Ansprüche, wobei
sich jeder der Speichenabschnitte in Richtung einer tangentialen Linie des äußeren röhrenförmigen Abschnitts des Nabenabschnitts so erstreckt, dass er mit dem äußeren röhrenförmigen Abschnitt verbunden ist.

8. Rad für ein Motorrad nach einem der vorhergehenden Ansprüche, wobei
ein Material des Rads Magnesium ist.

9. Rad für ein Motorrad nach Anspruch 8, das darüber hinaus eine Bremsscheibe umfasst, wobei
die Bremsscheibe an einem Ende des äußeren röhrenförmigen Abschnitts über ein Aluminiumblech montiert ist.

10. Verfahren zur Herstellung eines Rads für ein Motorrad, das aufweist:
ein Gießverfahren, bei dem ein Radkörper mit einem Felgenabschnitt (11), einem Nabenabschnitt (12) mit einem inneren röhrenförmigen Abschnitt (14) und einem äußeren röhrenförmigen Abschnitt (15), die über Rippen (16) verbunden sind, und einer Mehrzahl von Speichenabschnitten (13) druckgegossen wird, wobei der innere röhrenförmige Abschnitt des Nabenabschnitts über einen Überstand (14a) verfügt, der über ein Ende des äußeren röhrenförmigen Abschnitts in einer Achsrichtung herausragt, wobei die Rippen (16) radial relativ zu der Achsrichtung herausragen und sich in Achsrichtung erstrecken, und die Rippen durch Durchgangslöcher getrennt sind, die sich zwischen den Öffnungen an den seitlichen Enden des äußeren röhrenförmigen Abschnitts erstrecken,
ein Bearbeitungsverfahren, wobei ein Abschnitt zur Befestigung des Dämpfergehäuses (22) bereitgestellt durch Schraubenbohrungen an einem Ende des äußeren röhrenförmigen Abschnitts des Nabenabschnitts des Radgusskörpers gebildet wird, und ein Lagerkontaktflächenpaar (17, 18) an beiden Enden einer inneren Mantelfläche des inneren röhrenförmigen Abschnitts des Nabenabschnitts geformt wird,
Anbringen eines Dämpfergehäuses (23) auf dem Überstand zum Umschließen eines Dämpfers, der die vom Motor auf das Rad übertragene Antriebskraft abschwächt, und
Befestigen des Dämpfergehäuses an dem Abschnitt zur Befestigung des Dämpfergehäuses des äußeren röhrenförmigen Abschnitts mit Schrauben.

11. Verfahren zur Herstellung eines Rads für ein Motorrad nach Anspruch 10, wobei
eine Rippe an einem Vorderkantenabschnitt und an einem Hinterkantenabschnitt an jedem der Speichenabschnitte relativ zu einer Drehrichtung des Rads in einer Breitenrichtung des Rads ausgebildet wird, und
ein Abschnitt am äußersten Ende der Rippe als eine Werkzeugtrennfläche im Gießverfahren gebildet wird.

## Revendications

1. Roue pour motocycle comprenant un corps de roue unitaire coulé sous pression comprenant : une section de jante (11) sur laquelle un pneu est monté ; une section de moyeu (12) comprenant une section tubulaire extérieure (15) et une section tubulaire intérieure (14) reliées par l'intermédiaire de nervures (16), ladite section tubulaire extérieure et ladite section tubulaire intérieure possédant toutes les deux des ouvertures d'extrémité latérale à travers lesquelles s'étend un essieu ; et une pluralité de sections de rayon (13) reliant ladite section de jante et ladite section de moyeu l'une à l'autre, dans laquelle
une section de fixation de logement d'amortisseur (22) fournie par des orifices de boulon est formée à une extrémité de ladite section tubulaire extérieure de ladite section de moyeu ;
une surface de support de roulement (17, 18) est formée dans une surface circonférentielle intérieure de ladite section tubulaire intérieure de ladite section de moyeu ;
ladite section tubulaire intérieure de ladite section de moyeu comporte une saillie (14a) faisant saillie au-delà d'une extrémité de ladite section tubulaire extérieure dans un sens de l'essieu ;
la roue comprend en outre un logement d'amortisseur (23) pour enfermer un amortisseur qui atténue une force d'entraînement transmise d'un moteur à la roue, et ledit logement d'amortisseur est installé sur ladite saillie et est fixé à ladite section de fixation de logement d'amortisseur de ladite section tubulaire extérieure à l'aide de boulons ; et
lesdites nervures (16) font saillie de façon radiale par rapport audit sens de l'essieu et s'étendent dans ledit sens de l'essieu, et lesdites nervures sont séparées par des orifices de passage qui s'étendent entre lesdites ouvertures d'extrémité latérale de ladite section tubulaire extérieure.

2. Roue pour motocycle selon la revendication 1, dans laquelle
par rapport aux extrémités latérales d'une quelconque de ladite section tubulaire intérieure et ladite section tubulaire extérieure, une zone d'ouverture d'une des extrémités latérales est formée pour être plus importante que celle de l'autre extrémité latérale.

3. Roue pour motocycle selon une quelconque revendication précédente, dans laquelle
une nervure (33, 34) reliant la section de moyeu et la section de jante l'une à l'autre est formée dans chacune desdites sections de rayon.

4. Roue pour motocycle selon la revendication 3, dans laquelle
ladite nervure est formée à une partie de bord d'attaque et une partie de bord de fuite de chacune desdites sections de rayon par rapport à un sens de rotation de la roue le long d'un sens de la largeur de la roue.

5. Roue pour motocycle selon la revendication 3 ou 4, dans laquelle
chacune desdites sections de rayon comprend une première section de rayon et une seconde section de rayon positionnées l'une à côté de l'autre, et
chacune desdites sections de rayon est reliée à ladite section de moyeu alors que ladite première section de rayon et ladite seconde section de rayon se croisent.

6. Roue pour motocycle selon la revendication 5, dans laquelle
ladite première section de rayon et ladite seconde section de rayon se croisent de façon adjacente à une partie de liaison de celles-ci réalisant une liaison à ladite section de moyeu.

7. Roue pour motocycle selon une quelconque revendication précédente, dans laquelle
chacune desdites sections de rayon s'étend dans un sens de ligne tangentielle de ladite section tubulaire extérieure de ladite section de moyeu pour être reliée à ladite section tubulaire extérieure.

8. Roue pour motocycle selon une quelconque revendication précédente, dans laquelle
un matériau de la roue est du magnésium.

9. Roue pour motocycle selon la revendication 8, comprenant en outre un disque de frein, dans laquelle
ledit disque de frein est assemblé avec une extrémité de ladite section tubulaire extérieure par l'intermédiaire d'une plaque d'aluminium.

10. Procédé de fabrication d'une roue pour motocycle, comprenant :
un procédé de coulée dans lequel un corps de roue, comprenant une section de jante (11), une section de moyeu (12) comprenant une section tubulaire intérieure (14) et une section tubulaire extérieure (15) reliées par l'intermédiaire de nervures (16), et une pluralité de sections de rayon (13), est coulé par coulée sous pression, ladite section tubulaire intérieure de ladite section de moyeu possédant une saillie (14a) faisant saillie au-delà d'une extrémité de ladite section tubulaire extérieure dans un sens de l'essieu, lesdites nervures (16) faisant saillie de façon radiale par rapport audit sens de l'essieu et s'étendant dans ledit sens de l'essieu, et lesdites nervures étant séparées par des orifices de passage qui s'étendent entre des ouvertures d'extrémité latérale de ladite section tubulaire extérieure ;
un procédé d'usinage dans lequel une section de fixation de logement d'amortisseur (22) fournie par des orifices de boulon est formée à une extrémité de ladite section tubulaire extérieure de ladite section de moyeu dudit corps de roue coulé, et deux surfaces de support de roulement (17, 18) sont formées sur les deux extrémités latérales d'une surface circonférentielle intérieure de ladite section tubulaire intérieure de ladite section de moyeu ;
l'installation d'un logement d'amortisseur (23) pour enfermer un amortisseur qui atténue une force d'entraînement transmise d'un moteur à la roue sur ladite saillie ; et
la fixation dudit logement d'amortisseur à ladite section de fixation de logement d'amortisseur de ladite section tubulaire extérieure à l'aide de boulons.

11. Procédé de fabrication d'une roue pour motocycle selon la revendication 10, dans lequel
une nervure est formée à une partie de bord d'attaque et une partie de bord de fuite de chacune desdites sections de rayon par rapport à un sens de rotation de la roue dans un sens de la largeur de la roue, et
une partie d'extrémité distale de ladite nervure est formée en tant que surface de séparation dans le procédé de coulée.
